# EUROPÄISCHE PATENTSCHRIFT

(11) **EP 1 997 011 B1**
(45) Veröffentlichungstag und Bekanntmachung des Hinweises auf die Patenterteilung: **01.12.2010**
(21) Anmeldenummer: 07722877.3
(22) Anmeldetag: 21.02.2007
(51) Int. Cl.: G06F 15/02

(54) **TASCHENRECHNER**
POCKET CALCULATOR
CALCULATRICE DE POCHE

(30) Priorität: 03.03.2006 DE 202006003358 U
(43) Veröffentlichungstag der Anmeldung: 03.12.2008
(73) Patentinhaber: FAF Verwaltungs GmbH, 56068 Koblenz (DE)
(72) Erfinder: KLÖCKNER, Bernd, W., 14109 Berlin (DE); RUNZHEIMER, Dirk, K., 56068 Koblenz am Rhein (DE)
(74) Vertreter: Sturm, Christoph
(86) Internationale Anmeldenummer: PCT/EP2007/001500
(87) Internationale Veröffentlichungsnummer: WO 2007/101552

(56) Entgegenhaltungen:
- EP-A- 0 427 289
- US-A- 5 377 130
- TEXAS INSTRUMENTS: "TI-84 Plus TI-84 Plus Silver Edition" USER GUIDE, 2005, Seiten I,II,1-55,410-435, XP002473399

## Beschreibung

Die Erfindung betrifft einen Taschenrechner für insbesondere finanzmathematische Rechenroutinen nach dem Oberbegriff des Anspruchs 1.

Aus der Praxis sind finanzmathematische Taschenrechner, so zum Beispiel der von der Firma Hewlett Packard unter der Produktbezeichnung HP 10 Bll vertriebene Taschenrechner, bekannt, welche über ein Tastenfeld zur Eingabe von Daten, einen Speicher zum Speichern permanenter Daten und flüchtiger Daten, einen Prozessor zur Durchführung von finanzmathematischen Rechenroutinen und ein Display zum Anzeigen von Daten verfügen. Das Tastenfeld des finanzmathematischen Taschenrechners HP 10 BII verfügt über mehrere Funktionstasten für eine sogenannte Tilgungsverrechnungs-Rechenroutine. Unter einer Tilgungsverrechnungs-Rechenroutine soll eine Sparplan-Rechenroutine oder eine Entnahmeplan-Rechenroutine oder eine Kreditplan-Rechenroutine oder eine Leasingplan-Rechenroutine oder dergleichen verstanden werden können. Bei den Funktionstasten der Tilgungsverrechnungs-Rechenroutine handelt es sich um eine erste Funktionstaste zur Eingabe und/oder Bestimmung der Perioden (zum Beispiel Sparperioden, Entnahmeperioden) pro Jahr, eine zweite Funktionstaste zur Eingabe und/oder Bestimmung der Gesamtanzahl der Perioden, eine dritte Funktionstaste zur Eingabe und/oder Bestimmung des Startkapitals (zum Beispiel Starteinzahlung, Startauszahlung), eine vierte Funktionstaste zur Eingabe und/oder Bestimmung des Zinssatzes, eine fünfte Funktionstaste zur Eingabe und/oder Bestimmung der Raten (zum Beispiel Sparraten, Entnahmeraten) je Periode und eine sechste Funktionstaste zur Eingabe und/oder Bestimmung des Endkapitals (zum Beispiel Endguthaben, Restschuld).

Nach Belegung von fünf dieser sechs Funktionstasten durch Eingabe entsprechender Daten kann das Datum der nicht-belegten Funktionstaste von der Tilgungsverrechnungs-Rechenroutine durch Betätigen der entsprechenden Funktionstaste, ausgenommen die Abfrage der Perioden pro Jahr, bestimmt und im Display visualisiert werden.

Aus der DE 20 2005 003 159 U1 ist ein Taschenrechner für finanzmathematische Rechenroutinen bekannt, der zusätzlich Funktionstasten zur Eingabe und/oder Bestimmung von Daten einer dynamisierten Tilgungsverrechnungs-Rechenroutine aufweist, nämlich eine Funktionstaste zur Eingabe und/oder Bestimmung einer prozentualen Dynamisierungsrate, eine Funktionstaste zur Eingabe und/oder Bestimmung einer dynamischen Anfangsrate und eine Funktionstaste zur Eingabe und/oder Bestimmung einer dynamischen Endrate. Hiermit sind in gewissem Umfang bereits dynamisierte Tilgungsverrechnungs-Rechenroutinen ausführbar.

Den aus dem Stand der Technik bekannten Taschenrechnern ist gemeinsam, dass Funktionstasten einer finanzmathematischen Rechenroutine, so z. B. die oben erwähnten Funktionstasten einer Tilgungsverrechnungs-Rechenroutine, nur dadurch mit einem Datum belegt werden können, dass zuerst das jeweilige Datum eingegeben und anschließend die entsprechende Funktionstaste durch Betätigung derselben mit dem zuvor eingegebenen Datum belegt wird. Ein Bediener des Taschenrechners muss demnach stets präsent haben, welche Funktionstasten einer finanzmathematischen Rechenroutine zur Ausführung derselben mit einem Datum belegt werden müssen. Bei den aus dem Stand der Technik bekannten Taschenrechnern erfolgt demnach keine Unterstützung des Bedieners bei der Belegung von Funktionstasten einer finanzmathematischen Rechenroutine mit entsprechenden Daten. Hierdurch wird letztendlich die Funktionalität der aus dem Stand der Technik bekannten Taschenrechner beschränkt.

Ein weiterer Taschenrechner mit den Merkmalen des Oberbegeriff des Patentanspruchs 1 ist bekannt aus "TEXAS INSTRUMENTS: TI-84 Plus TI-84 Plus Silver Edition, USER GUIDE, 2005".

Hiervon ausgehend liegt der vorliegenden Erfindung das Problem zu Grunde, einen Taschenrechner für insbesondere finanzmathematische Rechenroutinen mit einer erweiterten Funktionalität zu schaffen. Dieses Problem wird durch einen Taschenrechner mit den Merkmalen des Anspruchs 1 gelöst.

Im Sinne der hier vorliegenden Erfindung verfügt der erfindungsgemäße Taschenrechner über zwei unterschiedliche Eingabemodi, wobei im zweiten Eingabemodus die Belegung von Funktionstasten mit einem Datum unter Verwendung des Steuerkreuzes erfolgt. Im zweiten Eingabemodus gibt der Taschenrechner automatisch eine aktuell zur Belegung vorgesehene Funktionstaste insbesondere einer finanzmathematischen Rechenroutine vor, so dass ein Bediener lediglich ein entsprechendes Datum eingeben und durch Betätigen des Steuerkreuzes der aktuell zur Belegung vorgesehenen Funktionstaste zuordnen muss. Nach erfolgter Belegung einer Funktionstaste wird dann vom Taschenrechner automatisch die als nächstes zu belegende Funktionstaste vorgegeben, die dann wiederum durch Eingabe eines Datums und durch Betätigen des Steuerkreuzes belegt werden kann.

Vorzugsweise umfasst das Steuerkreuz mehrere Pfeiltasten, wobei nach Eingabe eines Datums für eine aktuell zur Belegung vorgesehene Funkdonstaste die Belegung derselben mit dem eingegebenen Datum durch Bestätigen einer der Pfeiltasten des Steuerkreuzes erfolgt.

Bevorzugte Weiterbildungen der Erfindung ergeben sich aus den Unteransprüchen und der nachfolgenden Beschreibung. Nachfolgen wird ein Ausführungbeispiel der Erfindung, ohne hierauf beschränkt zu sein, anhand der Zeichnung näher erläutert. In der Zeichnung zeigt:

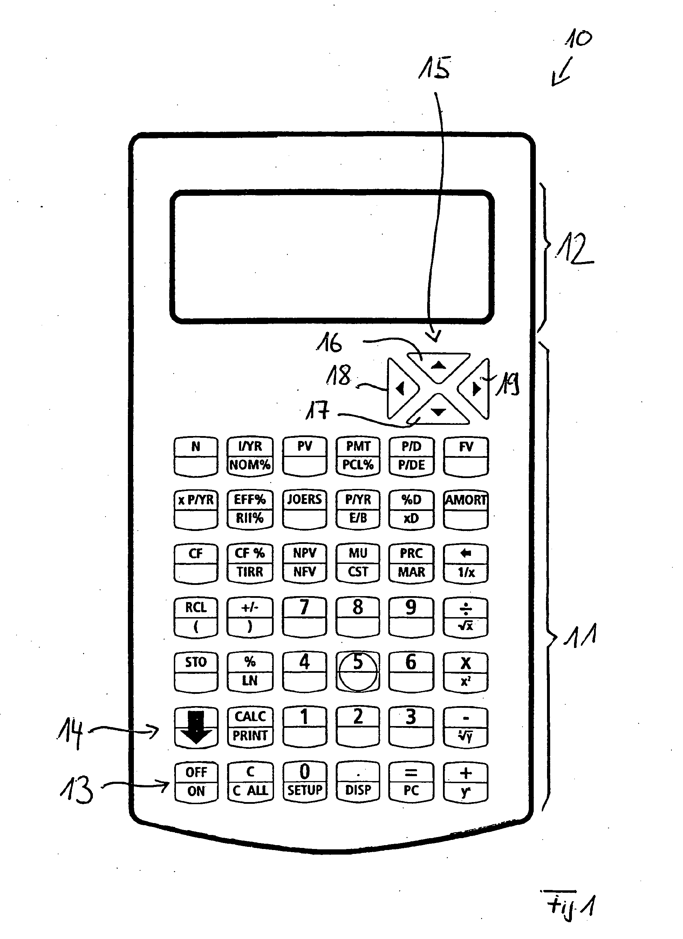

- Fig.1:: eine Draufsicht auf einen erfindungsgemäßen Taschenrechner.

Nachfolgend wird die hier vorliegende Erfindung unter Bezugnahme auf Fig. 1 in größerem Detail beschrieben.

Fig. 1 zeigt eine Draufsicht auf einen offindungsgemäßen Taschenrechner 10, der über ein Tastenfeld 11, ein Display 12 sowie einen in der Zeichnung nichtdargestellten Speicher sowie Prozessor verfügt. Das Tastenfeld 11 des erfindungsgemäßen Taschenrechners 10 verfügt über mehrere Eingabetasten zum Eingeben von Daten sowie über mehrere Funktionstasten zum Belegen und/oder Abfragen von Variablen insbesondere finanzmathematischer Rechenroutinen. Der nicht-dargestellte Speicher des Taschenrechners 10 dient dem Speichern permanenter sowie flüchtiger Daten. Der ebenfalls nicht-dargestellte Prozessor dient der Durchführung der insbesondere finanzmathematischen Rechenroutinen, das Display 12 dient dem Anzeigen von Daten.

Wie Fig. 1 entnommen werden kann, sind einige der Funktionstasten bzw. Eingabetasten des Taschenrechners 10 hardwareseitig in einer Taste kombiniert. So sind zum Beispiel die Einschalttaste ON sowie die Ausschalttaste OFF des Tastenfelds 11 hardwareseitig in einer Taste 13 kombiniert. Die Taste 13 ist demnach doppelt belegt. Durch Betätigen einer separaten Umschalttaste bzw. Doppelbelegungstaste 14 des Tastenfelds 11 kann zwischen den jeweiligen Funktionstasten bzw. Eingabetasten einer doppelt belegten Taste hin und her gewechselt werden. In Fig. 1 ist die Doppelbelegungstaste 14 als Pfeiltaste dargestellt, wobei nach Betätigung der Doppelbelegungstaste 14 die auf der jeweiligen Taste in der unteren Hälfte derselben dargestellte Funktion bzw. Funktionstaste anwählbar ist. Die Einschalttaste ON des Tastenfelds 11 ist also dann anwählbar, wenn zuvor die Doppelbelegungstaste 14 betätigt worden ist. Erst nach Betätigung der Doppelbelegungstaste ist demnach die Einschaltfunktion ON der Taste 13 anwählbar, wodurch ein ungewolltes Einschalten des erfindungsgemäßen Taschenrechners vermieden werden kann.

Wird nach Betätigung der Doppelbelegungstaste 14 nachfolgend eine andere Taste des Tastenfelds 11 betätigt, so wird die Funktionalität der Doppelbelegungstaste 14 automatisch deaktiviert, so dass die Doppelbelegungsfunktion der Doppelbelegungstaste 14 jeweils nur für die nachfolgend betätigte Taste des Tastenfelds 11 aktiv ist. Ohne vorhergehendes Betätigen der Doppelbelegungstaste ist immer nur die in der oberen Hälfte einer Taste dargestellte Funktionstaste bzw. Eingabetaste anwählbar.

Das Tastenfeld 11 des erfindungsgemäßen Taschenrechners 10 verfügt über mehrere Funktionstasten bzw. Eingabetasten für finanzmathematische Rechenroutine, so zum Beispiel über Funktionstasten für eine Tilgungsverrechnungs-Rechenroutine. Unter einer Tilgungsverrechnungs-Rechenroutine soll eine Sparplan-Rechenroutine oder eine Entnahmeplan-Rechenroutine oder eine Kreditplan-Rechenroutine oder eine Leasingplan-Rechenroutine oder dergleichen verstanden werden können.

Zu den Funktionstasten der Tilgungsverrechnungs-Rechenroutine gehören unter anderem die Funktionstaste P/YR zur Eingabe und/oder Bestimmung von Perioden pro Jahr, die Funktionstasten N bzw. x P/YR zur Eingabe und/oder Bestimmung einer Gesamtanzahl der Perioden, die Funktionstaste PV zur Eingabe und/oder Bestimmung eines Startkapitals, die Funktionstaste I/YR zur Eingabe und/oder Bestimmung eines Zinssatzes, die Funktionstaste PMT zur Eingabe und/oder Bestimmung einer Höhe bzw. eines Betrags der Raten je Periode sowie die Funktionstaste FV zur Eingabe und/oder Bestimmung eines Endkapitals.

Weitere Funktionstasten, nämlich die Funktionstaste %D zur Eingabe und/oder Bestimmung einer prozentualen Dynamisierungsrate, die Funktionstaste xD zur Eingabe eines Zeitabstands der Dynamisierung, die Funktionstaste P/D zur Eingabe und/oder Bestimmung einer dynamischen Anfangsrate sowie die Funktionstaste P/DE zur Eingabe und/oder Bestimmung einer dynamischen, Endrate, dienen der Dynamisierung einer Tilgungsverrechnungs-Rechenroutine.

In einem ersten Eingabemodus des erfindungsgemäßen Taschenrechners sind Funktionstasten dadurch mit einem Datum belegbar, dass zuerst das jeweilige Datum eingegeben und durch anschließendes Betätigen der entsprechenden Funktionstaste dieselbe mit dem zuvor eingegebenen Datum belegt wird. Soll im ersten Eingabemodus für eine Tilgungsverrechnungs-Rechenroutine z.B. die Funktionstaste PV mit einem Datum belegt werden, so wird zuerst das Datum über Eingabetasten eingegeben und anschließend durch Betätigen der Funktionstaste PV dieselbe mit dem zuvor eingegebenem Datum belegt. Soll z.B. die Funktionstaste P/DE im ersten Eingabemodus mit einem Datum belegt werden, so wird wiederum zuerst das Datum über Eingabetasten des Tastenfelds eingegeben, anschließend wird durch nacheinanderfolgendes Betätigen der Doppelbelegungstaste 14 und der Funktionstaste P/DE dieselbe mit dem zuvor eingegebenen Datum belegt.

Der erfindungsgemäße Taschenrechner 10 ist durch Betätigen einer Modustaste des Tastenfelds 11 von dem ersten Eingabemodus in einen zweiten Eingabemodus überführbar, wobei bei Überführung des Taschenrechners vom ersten Eingabemodus in den zweiten Eingabemodus ein Steuerkreuz 15 des Tastenfelds 11 aktivierbar ist. Das Steuerkreuz 15 ist demnach lediglich im zweiten Eingabemodus aktiv, im ersten Eingabemodus ist hingegen das Steuerkreuz 15 deaktiviert. Gemäß Fig. 1 verfügt das Steuerkreuz 15 über mehrere Pfeiltasten, nämlich eine erste Pfeiltaste 16, die nach oben zeigt, eine zweite Pfeiltaste 17, die nach unten zeigt, eine dritte Pfeiltaste 18, die nach links zeigt und eine vierte Pfeiltaste 19, die nach rechts zeigt. Die dreieckförmig konturierten Pfeiltasten 16, 17, 18 und 19 des Steuerkreuzes 15 sind dabei derart angeordnet, dass die erste Pfeiltaste 16 und die zweite Pfeiltaste 17 an derselben Horizontalposition vertikal übereinander angeordnet sind, und dass die dritte Pfeiltaste 18 und die vierte Pfeiltaste 19 an derselben Vertikalposition horizontal nebeneinander angeordnet sind, nämlich derart, dass die dritte Pfeiltaste 18 an einer ersten Seite neben der ersten Pfeiltaste 16 und der zweiten Pfeiltaste 17 und die vierte Pfeiltaste 19 an einer zweiten Seite neben der ersten Pfeiltaste 16 und der zweiten Pfeiltaste 17 angeordnet ist.

Wie bereits erwähnt, ist der erfindungsgemäße Taschenrechner 10 vom ersten Eingabemodus in den zweiten Eingabemodus unter Betätigung einer Modustaste unter gleichzeitiger Aktivierung des Steuerkreuzes 15 überführbar, wobei im gezeigten Ausführungsbeispiel der Tastenrechner 10 mehrere Modustasten umfasst, nämlich die für finanzmathematische Rechenroutinen spezifischen Modustasten "CF" sowie "AMORT", wobei die Modustaste "AMORT" für Darlehens-Rechenroutinen spezifisch und die Modustaste "CF" für Zahlungsstrom-Rechenroutinen spezifisch ist. Weitere Modustasten sind die Modustasten "JOERS", "STORE" sowie "SETUP", wobei die Modustaste "JOERS" für eine Historieroutine, die Modustaste "STORE" für eine Speicherroutine und die Modustaste "SETUP" für eine Routine zur Bestätigung bzw. Anpassung von Grundeinstellungen des Taschenrechners 10 spezifisch ist.

Durch Betätigung einer dieser Modustasten ist der Taschenrechner 10 vom ersten Eingabemodus in den zweiten Eingabemodus unter Aktivierung des Steuerkreuzes 15 überführbar, wobei, wie bereits erwähnt, jede dieser Modustasten für eine andere Routine spezifisch ist und im zweiten Eingabemodus für die jeweilige Routine ein Eingabeschema für Funktionstasten der jeweiligen Routine vorgegeben wird.

Im zweiten Eingabemodus ist eine Funktionstaste dadurch mit einem Datum belegbar, dass zuerst über Eingabetasten des Tastenfelds 11 ein Datum für die aktuell zu belegende Funktionstaste eingegeben und durch anschließendes Betätigen des Steuerkreuzes 15 die entsprechende Funktionstaste mit dem zuvor eingegebenen Datum belegt wird. Dabei wird im zweiten Eingabemodus in Art einer Menüführung zur Unterstützung eines Bedieners des Taschenrechners 10 die aktuell zu belegende Funktionstaste im Display visualisiert, so dass dem Bediener die aktuell zu belegende Funktionstaste der entsprechenden Routine angezeigt wird. Unter Kenntnis der aktuell zu belegenden Funktionstaste gibt dann der Bediener über Eingabetasten des Tastenfelds 11 ein Datum für die aktuell zu belegende Funktionstaste ein, wobei anschließend durch Betätigung des Steuerkreuzes 15 einerseits die aktuell zu belegende Funktionstaste mit dem zuvor eingegebenen Datum belegt wird und andererseits im Eingabeschema auf die als nächstes zu belegende oder gegebenenfalls abzufragende Funktionstaste der entsprechenden Routine gewechselt wird. Die als nächstes zu belegende Funktionstaste bzw. die abzufragende Funktionstaste wird dann wiederum für den Bediener im Display 12 visualisiert.

Zur Belegung einer Funktionstaste im zweiten Eingabemodus kann beim erfindungsgemäßen Taschenrechner 10 nach Eingabe des entsprechenden Datums jede der Pfeiltasten 16, 17, 18 und 19 des Steuerkreuzes 15 betätigt werden. Abhängig von der über die jeweilige Modustaste angewählten Routine sind dabei unter Umständen nicht alle Pfeiltasten des Steuerkreuzes aktiv, sondern lediglich nur eine Teilmenge derselben.

Es liegt dabei im Sinne der hier vorliegenden Erfindung, zusätzlich zu der aktuell zu belegenden bzw. abzufragenden Funktionstaste auf die Pfeiltasten des Steuerkreuzes zu visualisieren, die aktuell zur Belegung einer Funktionstaste und Navigation innerhalb der Routine verfügbar und damit anwählbar sind.

Im zweiten Eingabemodus kann durch mehrmaliges, hintereinanderfolgendes Betätigen des Steuerkreuzes ohne dazwischengeschobenes Eingeben von Daten über die Eingabetasten in dem jeweiligen Eingabeschema derart navigiert werden, dass dann die jeweiligen im Eingabeschema übersprungenen Funktionstasten nicht mit einem Datum belegt bzw. bereits mit einem Datum belegte Funktionstasten nicht überschreiben werden. Hierdurch können selektiv vorgenommene Belegungen einer Funktionstaste eines Eingabeschemas geändert werden, ohne dass Belegungen anderer Funktionstasten des Eingabeschemas verändert werden müssen.

Dann, wenn durch Betätigen einer für eine Routine spezifischen Modustaste der zweite Eingabemodus des Taschenrechners 10 aktiv ist, kann durch nochmaliges Betätigen dieser Modustaste der Taschenrechner wieder vom zweiten Eingabemodus in den ersten Eingabemodus unter Deaktivierung des Steuerkreuzes 15 überführt werden.

Beim erfindungsgemäßen Taschenrechner können demnach Funktionstasten von insbesondere finanzmathematischen Rechenroutinen über zwei unterschiedliche Eingabemodi belegt werden, wobei der zweite Eingabemodus, in welchem ein Bediener des Taschenrechners bei der Funktionstastenbelegung durch ein Eingabeschema im Sinne einer Menüführung unterstützt wird, durch Betätigung einer für die insbesondere finanzmathematische Rechenroutine spezifischen Modustaste aktiviert werden kann. Durch Betätigung dieser Modustaste wird demnach der zweite Eingabemodus sowie das entsprechende Eingabeschema aktiviert.

Im zweiten Eingabemodus erfolgen Belegungen von Funktionstasten durch zuvor eingegebene Daten sowie Navigationen im Eingabeschema durch Hin- und Herspringen zwischen Funktionstasten desselben lediglich durch Betätigung des Steuerkreuzes 15. Aktuell mit einem Datum zu belegende bzw. aktuell abzufragende Funktionstasten werden dabei im Display des Taschenrechners visualisiert, ebenso wie die zur Belegung von Funktionstasten sowie die zur Navigation im Eingabeschema der finanzmathematischen Rechenroutine zur Verfügung stehenden Pfeiltasten des Steuerkreuzes. Durch abermaliges Betätigen der Modustaste kann dann der Taschenrechner unter Deaktivierung des Steuerkreuzes in den ersten Eingabemodus zurückgeführt werden, in welchem die Belegung von Funktionstasten insbesondere finanzmathematischer Rechenroutinen auf die übliche Art und Weise erfolgen kann.

### Bezugszeichenliste

- 10: Taschenrechner
- 11: Tastenfeld
- 12: Display
- 13: Taste
- 14: Doppelbelegungstaste
- 15: Steuerkreuz
- 16: Pfeiltaste
- 17: Pfeiltaste
- 18: Pfeiltaste
- 19: Pfeiltaste

## Patentansprüche

1. Taschenrechner für finanzmathematische Rechenroutinen, mit einem mehrere Eingabetasten und Funktionstasten umfassenden Tastenfeld (11) zum Eingeben von Daten, mit einem Speicher zum Speichern permanenter Daten und flüchtiger Daten, mit einem Prozessor zur Durchführung finanzmathematischer Rechenroutinen und mit einem Display (12) zum Anzeigen von Daten, wobei das Tastenfeld (11) mehrere Funktionstasten für finanzmathematische Rechenroutinen und ein Steuerkreuz (15) aufweist, und wobei im ersten Eingabemodus des Taschenrechners die Funktionstasten der jeweiligen finanzmathematische Rechenroutine **dadurch** mit einem Datum belegbar sind, dass zuerst das jeweilige Datum eingeben und durch anschließendes Betätigen der entsprechenden Funktionstaste dieselbe mit dem zuvor eingegebenen Datum belegt wird, **gekennzeichnet durch** mehrere Modustasten für finanzmathematische Rechenroutinen; wobei **durch** Betätigung einer solchen für eine finanzmathematische Rechenroutine spezifischen Modustaste der Taschenrechner ausgehend von dem ersten Eingabemodus unter Aktivierung des im ersten Eingabemodus deaktivierten Steuerkreuzes (15) in einen zweiten Eingabemodus oder ausgehend vom zweiten Eingabemodus unter Deaktivierung des im zweiten Eingabemodus aktivierten Steuerkreuzes (15) in den ersten Eingabemodus überführbar ist; wobei im zweiten Eingabemodus für die jeweilige finanzmathematische Rechenroutine ein Eingabeschema für die Funktionstasten derselben vorgegeben wird; wobei im zweiten Eingabemodus Funktionstasten der jeweiligen finanzmathematische Rechenroutine **dadurch** mit einem Datum belegbar sind, dass zuerst ein Datum für eine aktuell zur Belegung vorgesehene Funktionstaste eingeben, **durch** anschließendes Betätigen des Steuerkreuzes die entsprechende Funktionstaste mit dem zuvor eingegebenen Datum belegt und hierbei im jeweiligen Eingabeschema auf die als nächstes mit einem Datum zu belegende Funktionstaste oder eine abzufragende Funktionstaste gewechselt wird; und wobei im zweiten Eingabemodus jeweils einerseits die nach dem Eingabeschema aktuell zur Belegung vorgesehene Funktionstaste im Display und andererseits die aktuell mögliche Betätigungsoption des Steuerkreuzes visualisierbar ist.

2. Taschenrechner nach Anspruch 1, **dadurch gekennzeichnet, dass** das Steuerkreuz (15) mehrere Pfeiltasten umfasst, wobei eine erste Pfeiltaste (16) nach oben, eine zweite Pfeiltaste (17) nach unten, eine dritte Pfeiltaste (18) nach links und eine vierte Pfeiltaste (19) nach rechts zeigt.

3. Taschenrechner nach Anspruch 2, **dadurch gekennzeichnet, dass** nach Eingabe eines Datums für eine aktuell zur Belegung vorgesehene Funktionstaste die Belegung derselben mit dem eingegebenen Datum durch Betätigen einer der Pfeiltasten des Steuerkreuzes erfolgt.

4. Taschenrechner nach einem oder mehreren der Ansprüche 1 bis 3, **dadurch gekennzeichnet, dass** nach Belegung einiger der Funktionstasten einer finanzmathematischen Rechenroutine durch Eingabe entsprechender Daten das Datum einer nicht-belegten Funktionstaste **dadurch** abfragbar ist, dass durch Betätigen des Steuerkreuzes die abzufragende Funktionstaste aufrufbar ist.

5. Taschenrechner nach einem oder mehreren der Ansprüche 1 bis 4, **dadurch gekennzeichnet, dass** im zweiten Eingabemodus durch mehrmaliges, hintereinanderfolgendes Betätigen des Steuerkreuzes ohne dazwischengeschobenes Eingeben eines Datums die jeweilige Funktionstaste übersprungen wird.

## Claims

1. Pocket calculator for financial mathematical calculation routines, having a keypad (11), comprising a plurality of input keys and function keys for the input of data, having a memory for the storage of permanent data and volatile data, having a processor for the performance of financial mathematical calculation routines and having a display (12) for the display of data, wherein the keypad (11) has a plurality of function keys for financial mathematical calculation routines and a D-pad (15), and wherein in the first input mode of the pocket calculator the function keys for the respective financial mathematical calculation routine can have a data item assigned to them by first of all inputting the respective data item and subsequently operating the relevant function key in order to assign the previously input data item thereto, **characterized by** a plurality of mode keys for financial mathematical calculation routines; wherein operation of a mode key of this kind which is specific to a financial mathematical calculation routine allows the pocket calculator to be transferred from the first input mode to a second input mode by activating the D-pad (15), which is deactivated in the first input mode, or from the second input mode to the first input mode by deactivating the D-pad (15), which is activated in the second input mode; wherein in the second input mode an input scheme for the function keys for the respective financial mathematical calculation routine is prescribed therefor; wherein in the second input mode it is possible to assign a data item to function keys for the respective financial mathematical calculation routine by first of all inputting a data item for a function key which is currently intended for the assignment, subsequently operating the D-pad in order to assign the previously input data item to the relevant function key and in so doing changing, in the respective input scheme, to the next function key which is intended to have a data item assigned to it or a function key which is intended to be polled; and wherein in the second input mode it is respectively possible to visually display firstly the function key currently intended for the assignment on the basis of the input scheme in the display and secondly the currently possible operating option for the D-pad.

2. Pocket calculator according to Claim 1, **characterized in that** the D-pad (15) comprises a plurality of arrow keys, wherein a first arrow key (16) points upwards, a second arrow key (17) points downwards, a third arrow key (18) points left and a fourth arrow key (19) points right.

3. Pocket calculator according to Claim 2, **characterized in that** input of a data item for a function key which is currently intended for the assignment is followed by the assignment of the input data item thereto by means of operation of one of the arrow keys of the D-pad.

4. Pocket calculator according to one or more of Claims 1 to 3, **characterized in that**, after some of the function keys for a financial mathematical calculation routine have had an assignment made by virtue of the input of appropriate data, it is possible to poll the data item of a function key without an assignment by operating the D-pad in order to call up the function key which is to be polled.

5. Pocket calculator according to one or more of Claims 1 to 4, **characterized in that**, in the second input mode, the respective function key is skipped by repeatedly operating the D-pad in succession without slotted-in input of a data item.

## Revendications

1. Calculatrice de poche pour sous-programmes de calcul spécialisés en mathématiques financières, avec un clavier (11) comprenant plusieurs touches de saisie et plusieurs touches de fonction pour saisir des dates, avec une mémoire pour mémoriser des dates permanentes et des dates volatiles, avec un processeur pour exécuter des sous-programmes de calcul spécialisés en mathématiques financières et avec un écran (12) pour afficher des dates, le clavier (11) comportant plusieurs touches de fonction pour les sous-programmes de calcul spécialisés en mathématiques financières et un pavé directionnel (15) et les touches de fonction du sous-programme de calcul spécialisé en mathématiques financières respectif pouvant être affectées, dans le premier mode de saisie de la calculatrice de poche, à une date, de sorte que la date respective est d'abord saisie puis que la touche de fonction est affectée à la date précédemment saisie par actionnement subséquent de la touche de fonction correspondante, **caractérisée par** la présence de multiples touches de mode pour sous-programmes de calcul spécialisés en mathématiques financières ; la calculatrice de poche pouvant passer du premier mode de saisie à un deuxième mode de saisie par activation du pavé directionnel (15) désactivé dans le premier mode de saisie ou du deuxième mode de saisie au premier mode de saisie par désactivation du pavé directionnel (15) activé dans le deuxième mode de saisie en actionnant une touche de mode propre à un sous-programme de calcul spécialisé en mathématiques financières ; un schéma de saisie pouvant être prévu dans le deuxième mode de saisie pour les touches de fonction propres au sous-programme de calcul spécialisé en mathématiques financières respectif ; des touches de fonction du sous-programme de calcul spécialisé en mathématiques financières respectif pouvant être affectées dans le deuxième mode de saisie à une date de sorte qu'une date est d'abord saisie pour une touche de fonction prévue pour une affectation donnée puis que la touche de fonction correspondante est affectée à la date précédemment saisie par actionnement subséquent du pavé directionnel et par ce moyen l'on passe, dans le schéma de saisie respectif, à la touche de fonction à affecter ensuite à une date ou à une touche de fonction à interroger ; et la touche de fonction prévue pour l'affectation selon le schéma de saisie d'une part ainsi que l'option d'actionnement actuellement possible du pavé directionnel d'autre part pouvant être visualisées respectivement sur l'écran dans le deuxième mode de saisie.

2. Calculatrice de poche selon la revendication 1, **caractérisée en ce que** le pavé directionnel (15) comprend plusieurs touches directionnelles, une première touche directionnelle (16) indiquant vers le haut, une deuxième touche directionnelle (17) indiquant vers le bas, une troisième touche directionnelle (18) indiquant vers la gauche et une quatrième touche directionnelle (19) indiquant vers la droite.

3. Calculatrice de poche selon la revendication 2, **caractérisée en ce qu'**après saisie d'une date, l'affectation de celle-ci avec la date saisie se produit par actionnement d'une des touches directionnelles du pavé directionnel pour une touche de fonction dont l'affectation est déjà prévue.

4. Calculatrice de poche selon l'une quelconque des revendications 1 à 3 ou plusieurs d'entre elles, **caractérisée en ce qu'**après affectation de quelques-unes des touches de fonction d'un sous-programme de calcul spécialisé en mathématiques financières par saisie des dates correspondantes, la date d'une touche de fonction non affectée peut être appelée en interrogeant la touche de fonction à interroger par actionnement du pavé directionnel.

5. Calculatrice de poche selon l'une quelconque des revendications 1 à 4 ou plusieurs d'entre elles, **caractérisée en ce que** dans le deuxième mode de saisie, la touche de fonction respective est désactivée en actionnant à plusieurs reprises le pavé directionnel sans saisir entre temps de date.
